# EUROPEAN PATENT SPECIFICATION

(11) **EP 3 807 131 B1**
(45) Date of publication and mention of the grant of the patent: **09.10.2024**
(21) Application number: 19759031.8
(22) Date of filing: 14.06.2019
(51) Int. Cl.: B60R 15/02, B60H 1/00

(54) **WATER HEATING AND DISTRIBUTION SYSTEM FOR VEHICLES**
VORRICHTUNG ZUM HEIZEN UND VERTEILEN VON WASSER FÜR FAHRZEUGE
SYSTÈME DE CHAUFFAGE ET DE DISTRIBUTION D'EAU POUR VÉHICULES

(30) Priority: 14.06.2018 PT 2018110786
(43) Date of publication of application: 21.04.2021
(73) Proprietor: De Araújo Barbosa, Joaquim, 4740-567 Esposende (PT)
(72) Inventor: De Araújo Barbosa, Joaquim, 4740-567 Esposende (PT)
(74) Representative: Couto, Cláudia
(86) International application number: PCT/IB2019/055001
(87) International publication number: WO 2019/239385

(56) References cited:
- CA-A1- 2 085 505
- CA-A1- 2 941 576
- CN-A- 107 640 082
- CN-U- 205 573 836
- JP-A- H 045 460

## Description

### Technical domain

This application reveals a water heating and distribution system for vehicles.

### Background

A common problem for users and drivers of heavy goods vehicles who spend many hours, or even days, inside a vehicle, often in isolated and remote areas, is the impossibility of taking a shower at the end of the working day in order to maintain good standards of hygiene.

In this regard, the system hereby disclosed aims to provide a technical solution that makes it possible to overcome this problem of the state of the art.

Document JPH045460A describes a moving bath unit and moving co-generator unit for bath unit for safely take a bath in an optional place such as camping field by loading a bathroom unit having a bathtub receiving the supply of hot water from a co-generator unit and a washing place on a truck capable of self-running or running by traction. The engine 2 of a co-generator unit C is operated, whereby a generator 3 is operated to supply a power to electric apparatuses disposed in the co-generator unit C and a bathroom unit B, while water is externally taken into a waste heat recovering device 4, which recovers the waste heat of the engine 2 to heat the water, and a large quantity of hot water required for the bathroom unit B is supplied to the bathroom unit B. As the bathroom unit B is provided with a bathtub 63 and a washing place 64, a bathing person can dip in the hot water in the bathtub 63 and take a bath. Further, as the co-generator unit C and the bathroom unit B are loaded on a truck 1 capable of self-running or running by traction, they can be moved in an optional place.

### Summary

This invention reveals a water heating and distribution system for vehicles according to claim 1.

The water heating and distribution system for vehicles comprises at least one device for water distribution and heating based on the heat produced in the vehicle, which feeds at least one water tank (10) which in turn feeds at least one internal shower system (20).

In one embodiment, the water distribution and heating device is placed together with a part or all of the exhaust system (15) of the vehicle, and in a box (14) in the passage of the cooling system which is located between the engine and the radiator (17), and in the crankcase of the engine (16).

In one embodiment, the water distribution and heating device is located inside the vehicle's exhaust system (15).

According to the invention, the water distribution and heating device comprises a coil or heat plate in contact with the exhaust system (15) of the vehicle.

In one embodiment, the distribution of water between the various components of the system is achieved through hoses or malleable and rigid pipes.

In another embodiment, the heat plate is formed of two halves that are placed around the exhaust system (1) and fastened to each other by at least one flexible clip (3).

In one embodiment, the heat plate is not permanently fixed to the exhaust; in these cases, some clamps are fixed to the exhaust that include a mechanism (27) identical to that of a mechanical car jack and which separates the plate when it reaches the desired temperature. This mechanism (27) may possess an electric, hydraulic or pneumatic motor (26). In one preferred embodiment, this mechanism (27) will be automatically activated when it reaches a temperature between 60 and 70°C.

In one embodiment, the water heating and distribution system for vehicles comprises a tank for hot water (10) and another for cold water (11).

According to the invention, the water tank (10) has a water pump whose energy is supplied directly by the transmission shaft of the vehicle.

According to the invention, the water pump causes the water to circulate continuously between the heating system and the tank reserved for the hot water (10).

In one embodiment, the water distribution device for heating starts in the crankcase of the engine (16). Then the water goes to a box (14) in the passage of the cooling system that is located between the engine and the radiator (17) and continues to the exhaust manifold (25), where a heat plate is molded around the entire form of the manifold. The water passes through a pipe to the section surrounding the rest of the exhaust (15), before again passing through a pipe to the next sector, where there is a coil (18) that runs around the exhaust pan, before passing to other heat plates or coils and exiting into the water tank.

According to the invention, each of the tanks comprises:
- An external wall (4);
- An intermediate wall (5);
- An inner wall (6);
- An air box (7);
- An insulating layer (8);
- At least one water outlet;
- At least one water inlet.

In one embodiment, the water heating and distribution system for vehicles has at least six connections, one for the output of water that circulates through the coils or heat plate, one for the entry of hot water coming from the coils or heat plate, one for the outflow of water to the taps, one for the inflow of the air that provides pressure to the water outlet, one to supply the external water and one for the outflow of air during the external supply.

In one embodiment, the air box (7) of each water tank is connected to the exhaust gas outlet.

In one embodiment, the internal shower system (20) is located inside the vehicle and is connected to the water tank (10).

In one embodiment, the internal shower system (20) slots into a part (24) placed on the wall of the cabin that connects the pipes from the outside the cabin to the pipes inside it.

In one embodiment, the dismantlable internal shower system (20) comprises a base, a cover, a shower, the hoses, a mixer, a curtain (22) with a vertical opening and a pipe for water drainage.

### General description

This technology arises from the need to provide a shower system for integration into vehicles that allows its occupants access to better standards of hygiene. This system also has the advantage of being environmentally friendly since it uses the heat produced by the normal operation of the vehicle to heat the water used in the shower system.

One possible embodiment, among others, is incorporation into long-distance, heavy goods transport vehicles. In this case, the heat released into the exhaust system is used to heat the water that circulates through the system hereby presented and which is stored in a tank contained in the vehicle (10). This tank is connected to the inside of the vehicle that possess a water mixer and a detachable curtain that allows the user to take a shower.

The system comprises at least three elements: a device for distributing water for its heating using the heat produced in the vehicle, at least one water tank (10) and an internal shower system (20).

### Brief description of the figures

To facilitate comprehension of this application, we attach figures which represent embodiments which, however, are not intended to limit the technology hereby disclosed.

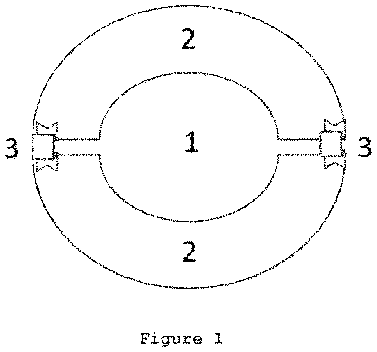

Fig.1 illustrates a sectional view of the vehicle's exhaust (1) to which two halves (2) of a heat plate are attached around the exhaust pipe (1), where the two halves of the heat plates are attached to each other by a clip (3).

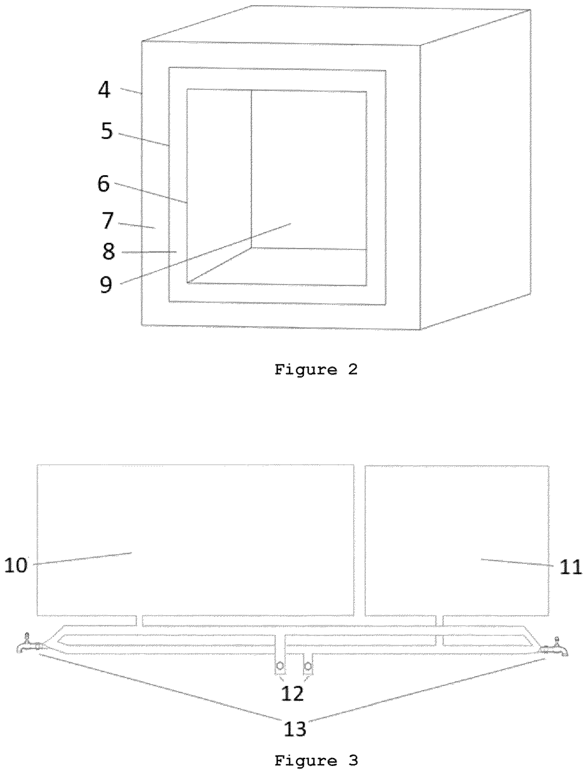

Figure 2 illustrates a sectional view of a water tank where the layers that comprise it are shown and where the following reference numbers are presented: 4 - external wall of the tank; 5 - intermediate wall of the tank; 6 - inner wall of the tank; 7 - air box; 8 - insulating layer between the inner wall and the intermediate wall; 9 - interior of the tank.
Figure 3 is a schematic representation of the water tanks and pipes fed by them - the pipes that feed the aforementioned tanks are not represented - and where the following reference numbers are presented: 10 - tank with higher volume; 11 - tank with lower volume; 12 - connection pipes; 13 - taps. The dimensions of the repositories may vary.

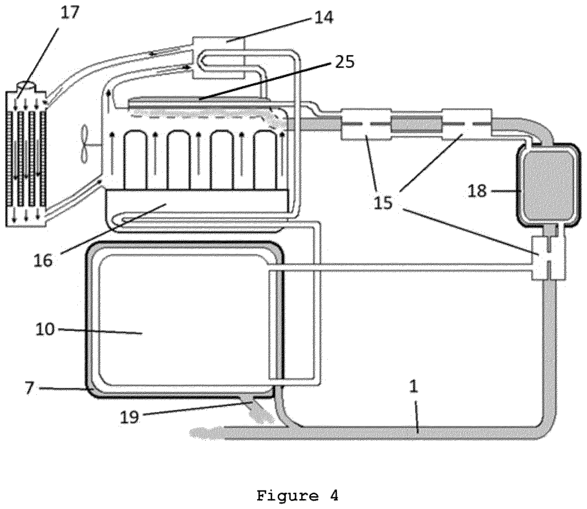

Figure 4 is a schematic representation of the water distribution and heating system described in this application where the water leaves the tank (10), passes through the coil inside the crankcase of the engine (16) where it is heated, before passing into a box (14) with a coil in the passage of the cooling system which is located between the engine and the radiator (17) . It then passes through the exhaust manifold (25) and continues to the heat plates or coils in the vehicle's exhaust system (15). The water inside the pipes then passes through coils (18) that surround the exhaust pan, through other heat plates or coils in the vehicle's exhaust system (15), before being sent back to the tank (10). This figure also shows how the exhaust pipe gases are sent to the air box (7) of the tank. The exhaust gases are finally released through the outlets (19).
Figure 5 illustrates a embodiment where an internal coil (23) passes through the inside of the exhaust pipe (1). In this case, the exhaust pipe is widened at the place where the coil is located in order to allow for the normal circulation of gases.

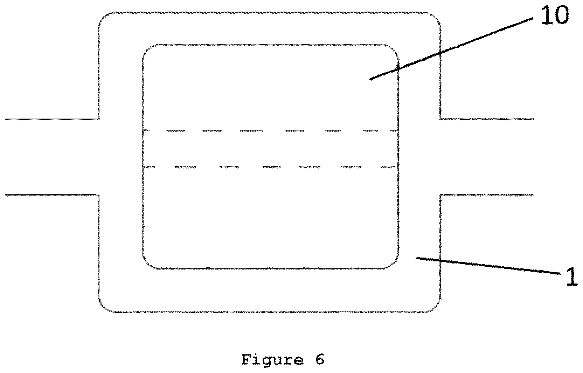

Figure 6 illustrates a embodiment to be used, preferably, in large vessels consisting of a water tank (10) integrated into a cubic structure created from the exhaust pipe (1) .
Exhaust gases pass through this structure that surrounds the repository which assist in heating and keeping the water hot thus transmitting heat to the water found therein. The dotted lines represent a pipe connected to the exhaust system that passes through the inside of the tank and where exhaust gases also circulate with the same function mentioned above.

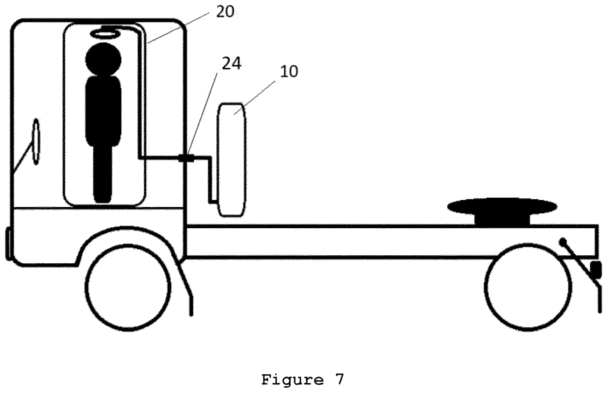

Figure 7 illustrates the shower system (20) inside a vehicle, which is fed by the tank (10) located outside the vehicle. The nipple (24) is fixed to the body of the vehicle and serves as a connection for the water hoses that leave the external repositories (10) which will be connected inside and feed the shower.

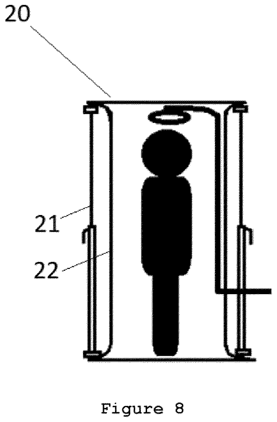

Figure 8 represents the shower system (20), which comprises at least two extendible bars (21) that raise the curtain cover or ceiling (22) in order to prevent the water used inside the shower from wetting the outside.

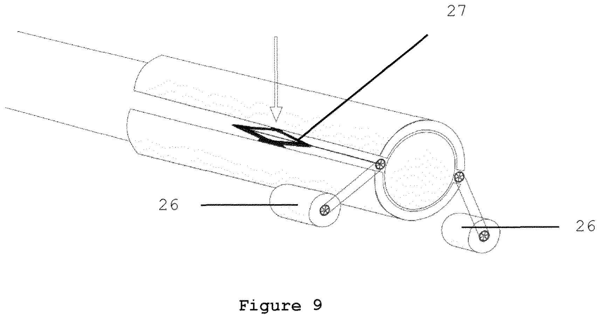

Figure 9 illustrates a embodiment where the distance between the heat plate (2) and the pipe where the exhaust gases circulate is adjustable based on the desired temperature by means of a mechanism (27) identical to a mechanical jack. The activation of the mechanism (27) is achieved by means of an electric motor (26).

### Description of embodiments

Next, we will describe the embodiments of this technology with reference to the figures. However, they should not be construed as limiting the scope of this patent application.

The water heating and distribution system has the following characteristics:
In this heating system, coils or heat plates can be used around or inside the pipes of the vehicle's exhaust system (15) in order to harness the heat released by and through them. The coils or heat plates can be used in any part of the exhaust system, including the exhaust manifold (25), pan and exhaust pipe. Additionally, the coils or heat plate may be applied to the crankcase of the vehicle's engine (16) or in a box (14) in the passage of the engine's cooling system.

The coil comprises flattened or rectangular pipes, which allow for greater heat absorption, since the contact surface area between the coil pipes and the exhaust pipe is greater than that of a cylindrical pipe. Flattened here means a pipe whose curvature is less pronounced, possessing a form with less height and greater width. The system comprises a thin plate, preferably of a metal with high thermal conductivity, that will be fixed or attached to the exhaust manifold (25) where the pipes of the coil will be fixed. The system also comprises a protective insulating layer subsequently covered by a plate or polymers to protect it from external weather conditions. Both the heat plate and the coil may consist of metallic materials.

In one embodiment, where the heat plate is used instead of the coil, the heat plate has the same insulating properties. The heat plate (2) differs from the coil since, instead of having pipes, it consists of a free plate where the water remains to be heated in its interior and whence it leaves via a small pipe. This heat plate (2) may be a single piece formed around the exhaust, or alternatively two pieces for easier application, each covering half the exhaust pipe (1), so that they are applied to half of each side of the exhaust pipe (1) the two halves (2) being tightened to the exhaust, and fastened by at least one flexible clip (3), where they are also connected by a thin pipe for the passage of water. The pipes that connect the plates or coils are made of malleable and/or rigid materials similar to pipes typically used in the transportation of the water, which goes from the engine to the radiator.

In one embodiment, the heat plate (2) is not permanently fixed to the exhaust; in such cases there are clamps fixed to the exhaust that include a mechanism (27) identical to that of a mechanical car jack and which separate the plate when it reaches the desired temperature. This mechanism may possess an electric, hydraulic or pneumatic motor (26). In a preferred embodiment, this mechanism will be activated automatically when it reaches a temperature between 60 and 70°C. These embodiments are particularly advantageous in mild/warm climates, where it is important to regulate the temperature transmitted to the heat plate.

This heating system begins in the crankcase of the engine (16). Then the water goes to a box (14) in the passage of the cooling system located between the engine and the radiator (17) before proceeding to the exhaust manifold (25), where a heat plate is molded all around the form of the exhaust manifold. The water passes through a pipe to the section around the original exhaust (15), then it passes once more through a pipe to the next sector, where there is a coil (18) that surrounds the exhaust pan, before passing through other heat plates or coils and exiting to the water tank.

This heating system can be adapted to the vehicle's original configuration.

Alternatively, a tailor-made manifold can be built with the coil incorporated into it. Both the exhaust and the pan can be purpose-built so as to include the heating system from the start. This system can be used covering the whole exhaust or just a part of it.

Where there is a manifold with a built-in system, there will also be a shutter before and after the manifold in order to divert the water, and avoid emptying this zone when it is not required, so that the repositories do not reach excessive temperatures. For example: when spring or summer arrives and temperatures rise, there is no need to heat it too much. This applies to all the fixed parts.

So, both the components of the heating system and the components of the vehicle itself can be adapted in order to make the system functional.

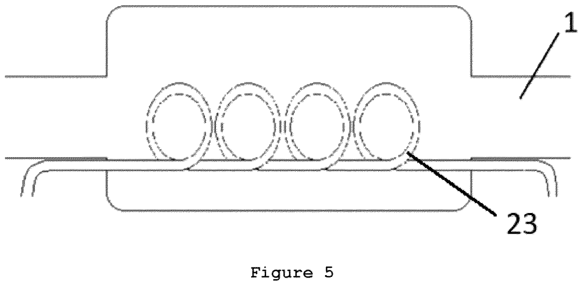

Normally this system will be used on the outside of the exhaust but it can also be used within the entire length of the exhaust, as illustrated in Figure 5, including the pan. In one embodiment, the exhaust pan will have an internal coil inside it (23). In Figure 5 we see an exhaust area that will receive a coil and, in order to prevent the blocking of the flow of gases, the exhaust will be widened in this area.

### Water tanks

The system comprises at least two water tanks, one larger (10) than the other (11), for example in the proportion of 70/30, with exactly the same characteristics, so that you can use the larger one for hot water in winter and invert this in summer, using the smaller one for hot and the larger one for cold water. The water circulation pipes of the two tanks extend until they are side by side to facilitate the connection of the system for sending water for heating to one tank or the other, for which it is simply necessary to disconnect one and connect the other which will be beside it.

Each tank (10 and 11) comprises the following characteristics:
Three coated walls (4, 5 and 6). Each tank has the capacity to withstand water and air pressure. The tank comprises, between the inner wall (6) and the intermediate wall(5), an insulating layer (8) which protects the hot water from the external temperature. The tank comprises, between the intermediate wall (5) and the external wall (4) an air box (7) fed by a pipe through which some exhaust gases are guided, from the exhaust pipe (1), to its interior in order to keep the zone dry and free from external moisture when necessary. The exhaust gases inside the air box are then released through an outlet (19).

The tank comprises four inlets/outlets: an outlet for water to circulate through the coils or heating block, which, after being heated in the coils or heating block, re-enters the tank through another inlet. A water outlet that goes to the faucets. And a compressed air inlet at the top of the tank to increase the pressure to the water outlet.

The tank comprises a lid where the water will be supplied and which will close from the inside out to withstand the pressure.

The tank comprises, in its upper part, a valve for reducing the air pressure when the tank is opened for water supply.

Alternatively, vehicles that do not have an air compressor can be equipped with a water pump that will provide water pressure to the system.

All pipes that leave or enter the inlets and outlets described above are located between the inner wall (6) and the intermediate wall (5) of the tank so that they are protected within the insulation.

The buffer and valve are located in the inner wall (6) and have a corresponding buffer on the external wall (4) that maintains the air box (7) and the insulating layer (8).

In the exhaust zone after the pan there is a lateral outlet where the exhaust gases that enter the air box between the intermediate wall and the external wall are sent, and which keeps this zone dry.

The air pressure pipe is connected to an air canister of the vehicle, which is more convenient.

The tank comprises a water pump that circulates the water throughout the system. This pump comprises a belt that enters a simple pulley which is fastened around the transmission shaft causing it to rotate or, not according to the invention, this is done by a 12-or 24-volt electric pump.

The pipes that carry the water from the water circulation system for heating in the tank are malleable and/or rigid pipes, protected by insulation.

In one embodiment, the tank comprises horizontal walls drilled or graded to reduce the impact of water.

In one embodiment, the tank comprises a hot water pipe that leaves one tank and a cold water one that leaves the other tank, connected to the inside of the vehicle. The connection can be made using malleable hoses, similar to those used to connect the hot water from the engine to the radiator to withstand the oscillation of the vehicle. The malleable hoses are also protected by insulation to maintain the temperature.

The water outlet pipe of the tanks is a free outlet having two taps placed at its ends (13). The connecting pipe (12), in turn, that leaves each tank has an outlet that enters the inside of the vehicle where a tap is connected for mixing the cold water with the hot water. All of these pipes are protected with insulation including the taps. In one embodiment, the taps (13) have a lid which is raised upon use. In one embodiment, the taps possess, at the water outlet, a 30-50cm rotating pipe that turns outwards during use and then withdraws inside and is fastened. This pipe can be adjusted in order to extend beyond the end of either side of the vehicle. The regulators of the outer faucets are protected from external temperatures, being stored inside the insulated zone with a plastic extension on the outside so as not to cool the water.

The malleable pipes are protected by other layers of similarly malleable pipes that protect them, while the more rigid pipes have a protective casing filled with insulating foam or another type of insulation.

The shower or shower system (20) inside the vehicle comprises the following characteristics:
A curtain (22) in the shape of a pipe or cylinder or with a square base that enters the base folded, which closes on top in the form of a case and is stored in an appropriate place. The curtain (22) is raised and supported by at least two extendible bars (21).

The base connects to a pipe on the floor of the vehicle that serves to drain the water from the shower and stretches the curtain (22) upwards attaching the cover to the ceiling of the vehicle.

In one embodiment, the curtain (22) has a vertical opening with a chain clasp and is protected along its entire length so as not to allow the outside to get wet.

It is through this opening that the person enters to take a shower.

In one embodiment, the shower system is connected to a part (24) fixed to the wall of the cabin which connects the pipes that come from the outside of the cabin to the shower pipes that are inside it.

In one embodiment, the shower system features a mixer tap at the bottom of the cover where the shower is located. There are two outlets on the outside of the curtain (22) where the pipes connect, and through which the cold and hot water is sent.

In one embodiment, the shower system features a fan that sends the air inside the vehicle into the interior of the shower system (20).

In one embodiment, the curtain (22) has four wings on the outside where they engage some tighteners for pulling to the sides creating space for the shower so that the curtain (22) does not stick to the user's body.

At the end of each use a drying cloth is passed over the entire system, the extendable bars (21) are taken down, the curtain (22) folded inside the case which is composed of the base and closed on top by the lid that serves as a ceiling and put away for further use.

This description is, clearly, in no way restricted to the embodiments presented in this document and a person with average knowledge of the area may foresee many possibilities for modifying it without deviating from the scope of the invention, as

defined in the claims. The previously described embodiments are obviously combinable with each other.

## Claims

1. Water heating and distribution system for vehicles comprising
at least one water distribution and heating device based on the heat produced in the vehicle that feeds at least one water tank (10), the at least one water tank (10) comprising at least one inlet, at least one outlet and an inner wall (6) externally surrounded by an intermediate wall (5) and by an insulating layer (8) comprised therein, which are further externally surrounded by an external wall (4), said tank (10) feeding at least one internal shower system (20); the water distribution and heating device harnessing the heat released from a part or all of an exhaust system (15), engine crankcase (16) or a box in a passage of the vehicle's cooling system (14), said heat harnessing being performed by coils or heat plates;
**characterized by**
between the intermediate wall (5) and the external wall (4) an air box (7) surrounding the tank (10) being fed by a pipe through which exhaust gases from the vehicle are guided from an exhaust pipe (1) to the interior of said air box (7); and a water pump comprised in the water tank (10), whose energy is supplied directly by a transmission shaft of the vehicle, causes water to circulate continuously between the heating device and the tank (10).

2. Water heating and distribution system for vehicles according to claim 1, **characterized in that** the distribution of water between the various components of the system is effected through malleable and/or rigid pipes.

3. Water heating and distribution system for vehicles according to any of the previous claims, **characterized in that** the heat plates are formed by two halves (2) which are placed around the exhaust system (1) and fastened to each other by at least one flexible clamp (3).

4. Water heating and distribution system for vehicles according to claim 3, **characterized in that** the two halves (2) are adjustable by means of a mechanism (27) between them and the pipe (1) where the exhaust gases circulate.

5. Water heating and distribution system for vehicles according to any of the previous claims, **characterized in that** it comprises a tank for hot water and another for cold water.

6. Water heating and distribution system for vehicles according to any of the previous claims, **characterized in that** it has at least six connections, a connection for the outflow of water that circulates through the coils or heat plate, a connection for the inflow of hot water coming from the coils or heat plate, a connection for the outflow of water to the taps, a connection for the inflow of the air that provides pressure to the water outlet, a connection to supply the external water and a connection for the outflow of air during the external supply.

7. Water heating and distribution system for vehicles according to previous claim 1, **characterized in that** the air box (7) of each water tank is connected to an exhaust gas outlet.

8. Water heating and distribution system for vehicles according to previous claim 1, **characterized in that** the internal shower system (20) is located inside the vehicle and is connected to the water tanks.

9. Water heating and distribution system for vehicles according to any of the previous claims, **characterized in that** the internal shower system (20) is dismantlable and comprises a base, a lid which, together with the base, forms a case, where the shower will be held and which is fastened by bars to the ceiling of the vehicle, a curtain with a vertical opening and a pipe for draining the water.

## Patentansprüche

1. Wassererwärmungs- und Verteilungssystem für Fahrzeuge umfassend
mindestens eine Wasserverteilungs- und Erwärmungsvorrichtung auf der Grundlage der im Fahrzeug erzeugten Wärme, die mindestens einen Wassertank (10) speist, wobei der mindestens ein Wassertank (10) mindestens einen Einlass, mindestens einen Auslass und eine Innenwand (6), die außen von einer Zwischenwand (5) und einer darin enthaltenen Isolierschicht (8) umgeben ist, umfasst, wobei diese zudem außen von einer Außenwand (4) umgeben sind, wobei der Tank (10) mindestens ein internes Duschsystem (20) speist; wobei die Wasserverteilungs- und Erwärmungsvorrichtung die von einem Teil oder der Gesamtheit eines Auspuffsystems (15), eines Motorkurbelgehäuses (16) oder eines Kastens im Durchgang des Kühlsystems (14) des Fahrzeugs freigesetzte Wärme nutzt, wobei die Wärme durch Spulen oder Heizplatten genutzt wird;
**gekennzeichnet durch**
eine Luftbox (7) zwischen der Zwischenwand (5) und der Außenwand (4), die den Tank (10) umgibt und über ein Rohr mit Abgasen des Fahrzeugs versorgt wird, das die Abgase von einem Auspuffrohr (1) in das Innere der Luftbox (7) leitet; und eine in den Wassertank (10) integrierte Wasserpumpe, deren Energie direkt von einer Antriebswelle des Fahrzeugs versorgt wird, wobei Wasser kontinuierlich zwischen der Erwärmungsvorrichtung und dem Tank (10) zirkuliert.

2. Wassererwärmungs- und Verteilungssystem für Fahrzeuge gemäß Anspruch 1, **dadurch gekennzeichnet, dass** die Verteilung des Wassers zwischen den verschiedenen Komponenten des Systems durch flexible und/oder starre Rohre erfolgt.

3. Wassererwärmungs- und Verteilungssystem für Fahrzeuge gemäß einem der vorhergehenden Ansprüche, **dadurch gekennzeichnet, dass** die Heizplatten durch zwei Hälften (2) gebildet werden, die um das Auspuffsystem (1) herum angeordnet und durch mindestens eine flexible Klammer (3) aneinander befestigt sind.

4. Wassererwärmungs- und Verteilungssystem für Fahrzeuge gemäß Anspruch 3, **dadurch gekennzeichnet, dass** die beiden Hälften (2) mittels eines Mechanismus (27) zwischen ihnen und dem Rohr (1), in dem die Abgase zirkulieren, einstellbar sind.

5. Wassererwärmungs- und Verteilungssystem für Fahrzeuge gemäß einem der vorhergehenden Ansprüche, **dadurch gekennzeichnet, dass** es einen Tank für Warmwasser und einen weiteren für Kaltwasser umfasst.

6. Wassererwärmungs- und Verteilungssystem für Fahrzeuge gemäß einem der vorhergehenden Ansprüche, **dadurch gekennzeichnet, dass** es mindestens sechs Anschlüsse aufweist, einen Anschluss für den Abfluss von Wasser, das durch die Spulen oder die Heizplatte zirkuliert, einen Anschluss für den Zufluss von heißem Wasser, das von den Spulen oder der Heizplatte fließt, einen Anschluss für den Abfluss von Wasser zu den Wasserhähnen, einen Anschluss für den Zufluss von Luft, das den Wasserauslass mit Druck versorgt, einen Anschluss für die externe Wasserversorgung sowie einen Anschluss für den Abfluss von Luft während der externen Versorgung.

7. Wassererwärmungs- und Verteilungssystem für Fahrzeuge gemäß dem vorhergehenden Anspruch 1, **dadurch gekennzeichnet, dass** die Luftbox (7) jedes Wassertanks mit einem Abgasauslass verbunden ist.

8. Wassererwärmungs- und Verteilungssystem für Fahrzeuge gemäß dem vorhergehenden Anspruch 1, **dadurch gekennzeichnet, dass** das interne Duschsystem (20) im Inneren des Fahrzeugs angeordnet ist und mit den Wassertanks verbunden ist.

9. Wassererwärmungs- und Verteilungssystem für Fahrzeuge gemäß einem der vorhergehenden Ansprüche, **dadurch gekennzeichnet, dass** das interne Duschsystem (20) zerlegbar ist und einen Sockel, einen Deckel, der zusammen mit dem Sockel ein Gehäuse bildet, in dem die Dusche untergebracht wird und der durch Stangen an der Decke des Fahrzeugs befestigt ist, einen Vorhang mit einer vertikalen Öffnung und ein Rohr zum Ableiten des Wassers umfasst.

## Revendications

1. Système de chauffage et de distribution d'eau pour véhicules comprenant
au moins un dispositif de distribution et de chauffage d'eau basé sur la chaleur produite dans le véhicule qui alimente au moins un réservoir d'eau (10), l'au moins un réservoir d'eau (10) comprenant au moins une entrée, au moins une sortie et une paroi interne (6) entourée extérieurement par une paroi intermédiaire (5) et par une couche isolante (8) comprise dans celle-ci, qui sont en outre entourées extérieurement par une paroi externe (4), ledit réservoir (10) alimentant au moins un système de douche interne (20); le dispositif de distribution et de chauffage d'eau captant la chaleur dégagée depuis une partie ou la totalité d'un système d'échappement (15), d'un carter moteur (16) ou d'un boîtier dans un passage du système de refroidissement (14) du véhicule, ladite captation de chaleur étant réalisée par des serpentins ou des plaques chauffantes;
**caractérisé par**
entre la paroi intermédiaire (5) et la paroi externe (4) une boîte à air (7) entourant le réservoir (10) étant alimentée par un tuyau à travers lequel les gaz d'échappement provenant du véhicule sont guidés depuis un tuyau d'échappement (1) vers l'intérieur de ladite boîte à air (7); et une pompe à eau comprise dans le réservoir d'eau (10), dont l'énergie est fournie directement par un arbre de transmission du véhicule, amène l'eau à circuler en continu entre le dispositif de chauffage et le réservoir (10).

2. Système de chauffage et de distribution d'eau pour véhicules selon la revendication 1, **caractérisé en ce que** la distribution d'eau entre les différents composants du système est effectuée par le biais de tuyaux malléables et/ou rigides.

3. Système de chauffage et de distribution d'eau pour véhicules selon l'une quelconque des revendications précédentes, **caractérisé en ce que** les plaques chauffantes sont formées de deux moitiés (2) qui sont placées autour du système d'échappement (1) et fixées l'une à l'autre par au moins une pince flexible (3).

4. Système de chauffage et de distribution d'eau pour véhicules selon la revendication 3, **caractérisé en ce que** les deux moitiés (2) sont réglables au moyen d'un mécanisme (27) entre elles et le tuyau (1) où les gaz d'échappement circulent.

5. Système de chauffage et de distribution d'eau pour véhicules selon l'une quelconque des revendications précédentes, **caractérisé en ce qu'**il comprend un réservoir pour de l'eau chaude et un autre pour de l'eau froide.

6. Système de chauffage et de distribution d'eau pour véhicules selon l'une quelconque des revendications précédentes, **caractérisé en ce qu'**il a au moins six raccordements, un raccordement pour la sortie de l'eau qui circule à travers les serpentins ou la plaque chauffante, un raccordement pour l'entrée de l'eau chaude provenant des serpentins ou de la plaque chauffante, un raccordement pour la sortie de l'eau vers les robinets, un raccordement pour l'entrée de l'air qui fournit la pression à la sortie d'eau, un raccordement pour l'alimentation en eau externe et un raccordement pour la sortie de l'air durant l'alimentation externe.

7. Système de chauffage et de distribution d'eau pour véhicules selon la revendication précédente 1, **caractérisé en ce que** la boîte à air (7) de chaque réservoir d'eau est raccordée à une sortie de gaz d'échappement.

8. Système de chauffage et de distribution d'eau pour véhicules selon la revendication précédente 1, **caractérisé en ce que** le système de douche interne (20) est situé à l'intérieur du véhicule et est raccordé aux réservoirs d'eau.

9. Système de chauffage et de distribution d'eau pour véhicules selon l'une quelconque des revendications précédentes, **caractérisé en ce que** le système de douche interne (20) est démontable et comprend une base, un couvercle qui, ensemble avec la base, forme un boîtier, où la douche sera maintenue et qui est fixé par des barres au plafond du véhicule, un rideau avec une ouverture verticale et un tuyau pour l'évacuation de l'eau.
